# EUROPEAN PATENT APPLICATION

(11) **EP 2 372 546 A1**
(43) Date of publication of application: **05.10.2011**
(21) Application number: 11156547.9
(22) Date of filing: 02.03.2011
(51) Int. Cl.: G06F 9/46

(54) **Method and systems for queuing messages for vehicle-related services**

(30) Priority: 11.03.2010 US 722194
(71) Applicant: Ford Global Technologies, LLC, Dearborn, MI 48126 (US)
(72) Inventor: Westra, Mike Raymond, Plymouth, MI 48170 (US); Waris, Faisal, Windsor Ontario N9G 2R2 (CA); Wadhawa, Sukhwinder, Windsor Ontario N9G 3C8 (CA); Geiger, Timothy Allan, Saline, MI 48176 (US)
(74) Representative: Dörfler, Thomas

(57) **Abstract**

Various embodiments include a method and system for queuing messages for transmission to/from a vehicle. One or more messages from one or more applications for performing one or more vehicle-related events may be received. The one or more messages may include a message identifier for each of the one or more vehicle applications to correlate the one or more messages with the one or more applications. The messages may be queued for transmission. A vehicle's connectivity to a wireless network is determined and, if the vehicle is connected to the wireless network, the one or more queued messages are transmitted. The one or more vehicle-related events based on the one or more messages are performed.

## Description

### BACKGROUND

### 1. Technical Field

Various embodiments generally relate to methods and systems for queuing messages related to vehicle-related services.

### 2. Background Art

Various examples relating to message queuing systems have been offered in the art. For instance, U.S.

Patent No. 7,213,150 issued to Jain et al. proposes a method and apparatus for secure message queuing. The system starts by creating a message at an origin. Next, the system computes a digest of the message. This digest is signed using an origin private encryption key. The message and the signed digest are forwarded to a queue for delivery to a recipient. Upon receiving the message and the signed digest at the queue, the system verifies that the digest was signed at the origin by using an origin public encryption key. If the signature is valid, the origin cannot deny creating the message. Valid messages and digests are placed on the queue and the recipient is notified that the message is available.

U.S. Patent No. 7,240,089 issued to Boudreau proposes a message queuing method, system, and program product with a reusable pooling component. Boudreau discloses a pooling mechanism to limit repeated connections in message queuing systems and to prevent excessive making and breaking of connections and associated overhead. This is accomplished by providing a layer between a client and the message queuing system where connections are pooled. The pooling mechanism prevents a system from losing too many resources through the repeated making and breaking of excessive message queuing system connections.

Additionally, the Microsoft Corporation manufacturers and distributes a product named MICROSOFT MESSAGE QUEUE SERVER. This system may be used in, for example, transaction-processing (TP) applications (e.g., for exchange of stock, banking transactions, or shop-floor control).

### SUMMARY

One aspect includes a computer-implemented method for queuing messages for transmission to/from a vehicle. The method may be performed at a vehicle computing system. Alternatively or additionally, the method may be performed at a server.

The computer-implemented method may include receiving one or more messages from one or more applications for performing one or more vehicle-related events. The one or more messages may include a message identifier for each of the one or more vehicle applications to correlate the one or more messages with the one or more applications. The one or more vehicle-based events may include, but are not limited to, a media lookup event, a media tagging event, an emergency call event, a vehicle diagnostics event, and a Real Simple Syndication (RSS) event. Further vehicle-related events may include application installation, service pack installation, or installation of customization settings.

The one or more messages may be outgoing messages. Thus, in one or more embodiments, the method may further include receiving one or more incoming messages and queuing the one or more incoming messages for transmission to the one or more applications. The receiving and queuing steps may be performed if the vehicle is connected to the wireless network.

The method may further include determining a state of a vehicle's connection to a wireless network. The vehicle may connect to the wireless network at a predetermined time or occurrence. The one or more messages may, thus, be transmitted at the predetermined time or occurrence. Determining the vehicle's wireless network connection state may further include determining a primary address (such as a host name) with which to generate a connection.

The method may further include transmitting the one or more queued messages if the vehicle is connected to the wireless network.

The method may further include performing the one or more vehicle-related events based on the one or more messages.

Another aspect may include a method including receiving one or more messages from one or more vehicle-related applications. The vehicle-related applications may include a message identifier for correlating the one or more messages with each application.

The method may further include queuing the one or more messages for transmission.

The method may further include determining if a vehicle is connected to a wireless network. If connected, the method may further include transmitting the one or more queued messages.

Additionally, the method may further include performing the one or more vehicle-related events based on the one or more messages.

The method may further include receiving a request at a computer for performing the one or more vehicle-related events.

Another aspect may include a message queuing system for transmitting messages to/from a vehicle. The message queuing system may include at least one computer. The at least one computer may be standardized to transmit the one or more queued messages using different communication platforms including, but not limited to, electronic mail, short messaging service (SMS), and USB.

The at least one computer may be further configured to receive one or more messages from one or more applications for performing one or more vehicle-related events. The one or more messages may include a message identifier for each of the one or more vehicle applications to correlate the one or more messages with the one or more applications.

In one embodiment, the one or more applications may be a plurality of applications.

The at least one computer may be further configured to queue the one or more messages for transmission.

Additionally, the at least one computer may be further configured to determine a state of a vehicle's connection to a wireless network. The at least one computer may be further configured to transmit the one or more queued messages if the vehicle is connected to the wireless network. The wireless network may be a broadband wireless network.

The at least one computer may be further configured to perform the one or more vehicle-related events based on the one or more messages.

In one embodiment, the at least one computer may be at least two computers. At least one computer may be a vehicle computing system and at least one computer may be a server.

These and other aspects of the present invention will be better understood in view of the attached drawings and following detailed description of the invention.

### BRIEF DESCRIPTION OF THE DRAWINGS

The figures identified below are illustrative of some embodiments of the present invention. The figures are not intended to be limiting of the invention recited in the appended claims. Embodiments of the present invention, both as to their organization and manner of operation, together with further object and advantages thereof, may best be understood with reference to the following description, taken in connection with the accompanying drawings, in which:
FIGURE 1 shows a system architecture for a message queuing system and the operation of the message queuing system according to one of the various embodiments of the present invention;
FIGURE 2 shows a system architecture for a message queuing system and the operation of the message queuing system according to another one of the various embodiments of the present invention;
FIGURE 3 shows a message queuing operation for using one or more vehicle-based services according to one of the various embodiments of the present invention; and
FIGURE 4 illustrates an exemplary block topology of a vehicle computing system according to one of the various embodiment of the present invention.

### DETAILED DESCRIPTION

Detailed embodiments of the present invention are disclosed herein. However, it is to be understood that the disclosed embodiments are merely exemplary of an invention that may be embodied in various and alternative forms. Therefore, specific functional details disclosed herein are not to be interpreted as limiting, but merely as a representative basis for the claims and/or as a representative basis for teaching one skilled in the art to variously employ the present invention.

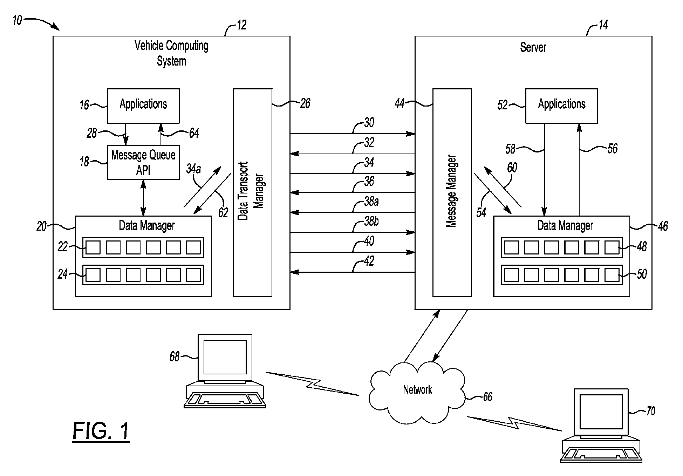

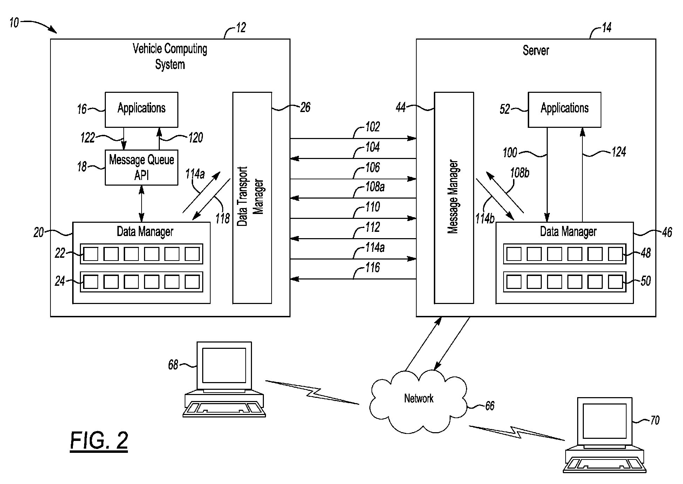

FIGURES 1 and 2 illustrate an exemplary architecture of a message queuing system. FIGURE 1 illustrates a message queuing system in which a request for an application is generated at the vehicle computing system 12. FIGURE 2 illustrates the same message queuing system in which the request for an application is generated at the server 14. Both operations will be described in further detail below.

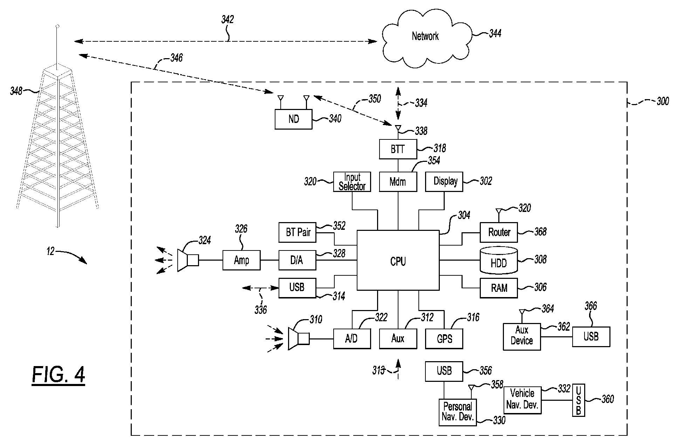

Vehicle computing system 12 of message queuing system 10 may be housed in a vehicle. Figure 4 is an exemplary illustration of a vehicle computing system. FIGURE 4 will be described in further detail below. It should be understood that the arrangement of the figures is illustrative. The figure arrangements may be modified (e.g., one or more features added, deleted or combined) or rearranged without departing from the scope of the invention.

Vehicle computing system 12 may provide one or more services 16 to a vehicle occupant within the vehicle. Non-limiting examples of services 16 may include a media lookup service, an emergency call service, a vehicle diagnostics service, a Real Simple Syndication (RSS) service, web services using the World Wide Web, and software licensing and update services. In one embodiment, these services 16 may be installed as applications (or software) on the vehicle computing system 12. The applications may be factory installed from an original equipment manufacturer (OEM) or later uploaded to the vehicle computing system 12. In another embodiment, these services 16 may be received from a service delivery network (SDN) (e.g., from network 61 of Figure 4). In this embodiment, application 16 may be software for communicating with the SDN.

A message queue API 18 allows communication between the application(s) 16 and the message queue module 20. The message queue API 18 may be invoked by one or more application(s) 16 when a request is sent to the application(s) 16. The application(s) 16 may be activated automatically (e.g., based on a preconfigured time) or manually (e.g., by a user). A non-limiting example of an automatic activation may be a preconfigured time to perform vehicle diagnostics (e.g., every 10,000 miles). Another non-limiting example of an automatic activation may be a scheduled synchronization to download content such as news. A non-limiting example of a user activation of the application(s) 16 may be a user tagging of a song listened to from the vehicle's audio system.

Based on the requested action to be performed, the application(s) 16 may generate one or more messages for transmitting the request. The messages may be transmitted as data packets having a particular size. For example, the data packets may be no larger than 1 MB as a default. As another non-limiting example, the size of the data packets may be based on the available mailbox space on server 14. Furthermore, the acceptable message size for transmission may be configured, e.g., by the OEM or by a vehicle owner.

In one embodiment, "large" messages (e.g., and without limitation, greater than 1 MB) may be partitioned into smaller messages for transmission. Accordingly, less bandwidth may be used during transmission of the message(s). Furthermore, data loss can be avoided due to, for example, an unreliable network connection. Thus, if a network connection is terminated while downloading a portion of the payload, then on the next available connection, the interrupted portion and subsequent portions may be downloaded. The portions downloaded prior to the interruption may maintain its integrity at the receiving end (e.g., server 14 or vehicle computer system 12). Once all of the portions of the message are received, the message may then be read by the recipient system (vehicle computer system 12 or server 14).

In another embodiment, messages exceeding a certain size may not be transmitted at all. These messages may be deleted by the system 12 and/or 14.

The messages containing the request(s) may be placed in the data manager 20. The queued messages may be for one or a plurality of applications. Thus, for example, if a user makes a request to two or more applications (e.g., vehicle diagnostics and music tagging), messages associated with each of the requests may be queued in the data manager 20.

The data manager 20 may be responsible for queuing incoming and outgoing messages. The data manager application 20 may be factory installed by an OEM or later installed to the vehicle computing system 12.

The data manager 20 may include an outbound queue 22 and an inbound queue 24. Outgoing messages may remain in the outbound queue 22 until a connection is established between the vehicle computing system 12 and the server 14. Inbound messages may remain in the inbound queue 24 after the one or more messages from the server 14 have been transmitted. The messages stored in the inbound queue 24 or the outbound queue 22 may be stored in the vehicle computing system's 12 non-persistent memory (not shown).

The data transport manager 26 may be responsible for establishing communication with server 14. Non-limiting examples of communication may be broadband wireless (e.g., WiFi, WiMax, etc.) or digital-over-voice (DoV) communication. The messages may be transported using a TCP/IP protocol. Other non-limiting protocols may include POP3, FTP, MAPI, MQ Series, BizTalk, and BitTorrent. In one embodiment, the message may be sent as electronic mail. Accordingly, an IMAP email protocol may be additionally or alternatively utilized. The IMAP protocol may or may not include an IMAP-IDLE expansion.

The messages may be transported to the server securely. In one embodiment, a Simple Authentication and Security Layer (SASL) security mechanism may be utilized for securely transporting the messages and authenticating the vehicle computing system 12 and the server 14. For example, with every message, an electronic serial number (ESN) and a Secure Hash Algorithm (SHA) function may be transported. Non-limiting examples of SHA's include, but are not limited to, SHA-0, SHA-1, or SHA-2. In one embodiment, the ESN may serve as a login and the SHA function may serve as a password.

The data manager 26 may generate a connection with the message manager 44 of server 14. In addition to completing the connection with vehicle computing system 12, the message manager 44 may also receive the transported messages and distribute and receive the message(s) to/from the data manager 46 of server 14. In one embodiment, the message manager 44 may be one or more email servers. Additionally, the message manager 44 may manage data transmitted over other communication systems including, but not limited to, SMS, DoV, and USB.

Data manager 46 may be responsible for queuing incoming and outgoing messages at server 14. The data manager 46 may include an outbound queue 48 and an inbound queue 50. Outgoing messages may remain in the outbound queue 22 until a connection is established between the vehicle computing system 12 and the server 14. Inbound messages may be received and remain in the inbound queue 24 after the one or more messages from the vehicle computing system 12 have been transmitted the server 14. The messages stored in the inbound queue 24 or the outbound queue 22 may be stored in the server's 14 non-persistent memory (not shown).

Inbound messages received by server 14 (e.g., based on the automatic or manual requests made to application 16) may be transmitted to the application(s) 52 for processing. For example, the request by a user to tag a song may be received by server 14 and placed in the inbound queue 50 when a connection is established between the vehicle computing system 12 and the server 14. The message may then be transmitted to the music application stored on server 14 for tagging. The tagged song, or a notice that the song has been tagged, may then be sent to the user at terminal 68.

Terminal 68 may be a personal computer (PC) or a nomadic device (ND). Terminal 68 may communicate with server 14 through network 66. Network 66 may be any broadband or dial-up connection. Non-limiting examples of broadband connections may include WiFi, LAN, WAN, Internet, Intranet, or combinations thereof.

In one embodiment, third-party service providers (terminal 70) may communicate with vehicle computing system 12 through server 14. Third-party service providers may provide one or more services to vehicle computing system 12 and/or receive requests for a service from vehicle computing system 12. Non-limiting examples include song tagging information (transmitted from, e.g., PANDORA), non-subscription and subscription based content (e.g., book of the month, audible audio book licenses, and sport scores), electronic payment information (e.g., drive-by micro payments used at fast-food restaurants, toll booths and gas stations), in-vehicle billboard advertising, vehicle tracking, and incident reporting.

Message transmission may be accomplished in at least one of the following non-limiting manners: e-mail, SMS, DoV, USB, Sirius Data Link, DTMF, TCP (e.g., WiFi, Bluetooth and Mobile Broadband), and Mesh Networking (i.e., based on the 802.11s communication standard). Thus, messages may be queued and transmitted using any communications system without altering the architecture as illustrated in FIGURES 1 and 2.

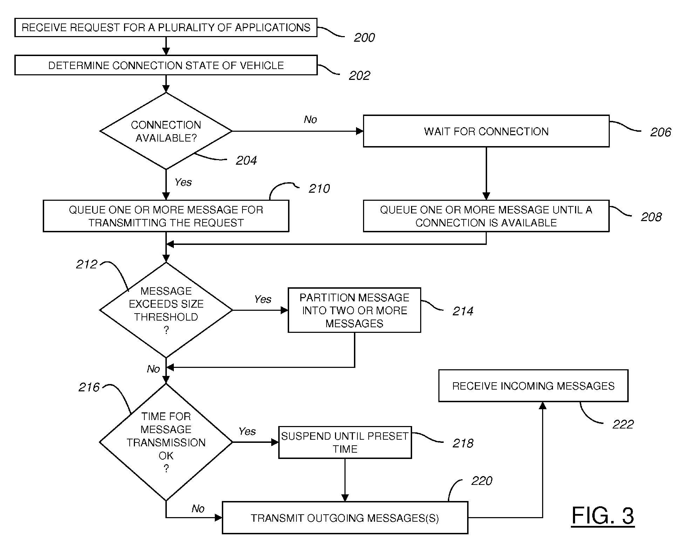

Further details of the system architecture (FIGURES 1 and 2) will be described with respect to the operation of the message queuing system as shown in FIGURE 3. As illustrated in block 200, a user may submit a request for one or more applications 16 from the vehicle (e.g., song tagging, as described above). The request may be made via a button press, key press, voice command, and the like. Referring to FIGURE 1, as shown by data flow 28, in response to the request, the application(s) 16 may invoke the API 18 to queue one or more messages generated by the application(s) 16 for processing.

As illustrated in block 202, the vehicle computing system 12 may determine the data connection state of the vehicle. The vehicle computing system 12 may search for a primary address with which to generate a connection. A data connection may be any wireless connection (e.g., and without limitation, WiFi, WiMax, and DoV). Thus, the primary address that the vehicle computing system 12 may retrieve may include, but is not limited to, a host name (e.g., where a WiFi or WiMax connection is available) or a telephone number (e.g., where a DoV connection is available).

The data connection determination may further include determining if the connection is available as illustrated in block 204. If a connection is not available, then the vehicle computing system 12 may wait for a connection as illustrated in block 206. The one or more message may be queued until a connection is available as illustrated in block 208.

In one embodiment, the vehicle computing system 208 may search for a connection at predetermined times (e.g., and without limitation, every 5 minutes). Alternatively or additionally, a vehicle occupant may manually request for a connection search from the vehicle (e.g., using voice commands, a button press, and the like). The connection search times may be configured during factory installation of the vehicle computing system 12 and/or at a later time (e.g., after vehicle acquisition). The connection search times may be configured from the vehicle computing system 12, a nomadic device, or personal computer (PC) using a software configuration tool (e.g., downloaded from an OEM's website such as www.syncmyride.com).

In one embodiment, searching for a connection may include determining whether the connection is in fact a direct Internet connection. For example, some public venues offering WiFi services to customers may block traffic to the Internet until payment for the Internet connection has been received. As another non-limiting example, a subscription may be required for obtaining access to the Internet. In such instances, where a direct connection is not available, a message may be transmitted stating that the connection is unavailable.

In some embodiments, system 10 may also include a backup server (not shown) where a connection to server 14 (i.e., the primary server) cannot be made. In such instances, vehicle computing system 14 may also search for a connection with the backup server. If the backup server is unavailable, a message transmitted to the user may state that a connection cannot be made to the server.

If a connection is available, the vehicle computing system 12 may alert the data transport manager 26 of the connection availability and a signal 30 may be transmitted to the server 14 for generating a connection with server 14. The server 14 may transmit a response signal 32 in response to the request including the state of the "mailboxes" (e.g., a message that there are messages in the server's 14 outbound queue) and the size of the "mailboxes." It should be understood that the term "mailbox" refers generally to one or more locations for holding the one or more queued messages. Accordingly, as illustrated in block 210, the queued messages may be queued for transmission to the server 14.

Based on the information received from the server 14, the data transport manager 26 may determine whether the queued messages exceed a size threshold (e.g., 1 MB) as illustrated in block 212. If the size threshold is exceeded, the messages may be partitioned into two or more smaller messages as illustrated in block 214. As described above, the split message may not be read until all pieces are received at server 14.

If the messages do not exceed a size threshold or once the messages are partitioned, a further determination may be made as to whether there is preset time for message transmission as illustrated in block 216. A user (e.g., and without limitation, a vehicle owner, a dealer, or a service technician) may configure a time for message updates (i.e., transmission and/or receipt). Thus, when configured, the vehicle computing system 12 may periodically check for message updates according to the configured time. For example, if a user has configured a message update to occur every 24 hours, then when a connection is generated, vehicle computing system 12 may query server 14 every 24 hours for the message updates. It should be understood that the configuration can be based on a specific time range (e.g., every 24 hours) or specific time periods (e.g., every morning at 3 AM).

In one embodiment, message update checks may be limited by a timeout period. Time out periods may also be configured by a user. For example, if the message update check is configured to occur every 24 hours, but it has been 36 hours since the most recent update, the vehicle computing system 12 may not check for another update until a new connection with server 14 is established. Thus, every new connection may reset the timeout period.

In a further embodiment, the user may also manually request for message updates. Thus, the timeout period may be also reset when the user manually requests for a message update. If a user requests a message update when no connection is available, the user may be presented with an error message (e.g., stating that the connection is unavailable). Alternatively, a message update check option may be disabled during a period of no connectivity.

If a message transmission period has been preset, then message transmission may be suspended until the configured transmission time as illustrated in block 218.

If the time for message transmission has been met or the user has manually requested a message update, then the queued message may be transmitted as illustrated in block 220. The outbound message 34 (FIGURE 1) may be released from the outbound queue 22 and transmitted to the server 14 via the data transport manager 26. Messages maybe transmitted using suitable methods known in the art based on one or more of the communications systems described above.

Messages may be released and received according to a first in, first out (FIFO) arrangement. Alternatively or additionally, higher priority messages may be transmitted before lower priority messages.

The server 14 may receive the incoming message 54 and place it in the inbound queue 50. The queued message 56 may be transmitted to the application(s) 52 for asynchronous processing.

Once processed, a response message 58 to the request may be generated and transmitted to the outbound queue 48. As described above, the queuing process can be utilized when requests are made to multiple applications. As such, in one embodiment, the application(s) 52 may generate the appropriate response to the request based on a message ID associated with each request. The message ID is transmitted to ensure uniqueness and proper delivery of the message. For example, in an e-mail based communication system, each message may have associated with it an IMAP 64-bit Message ID (i.e., a 32-bit message ID and a 32-bit unique identifier validity value to a mailbox). The processing application 52 may utilize this ID to correlate the request with the responses.

When the messages are queued in outbound queue 48, server 14 may transmit a response signal 38a to vehicle computing system 12. Vehicle computing system 12 may transmit a check signal 38b to receive the inbound message(s). In one embodiment, to account for a sudden loss of connectivity with vehicle computing system 12, server 14 may transmit response signal 38a at the same time as message(s) are being transmitted to server 14.

Upon checking for incoming messages, vehicle computing system 12 may transmit a request (via request signal 40) for the incoming messages. As illustrated in block 222, the incoming messages may be received via return signal 42. In one embodiment, the vehicle computing system 12 may receive specified messages based on the Message IDs.

Upon receipt of the incoming messages, the vehicle computing system 12 may place the message(s) into the inbound queue 22. A middleware layer (not shown) may ensure signatures of the incoming messages and that the messages have arrived in tact.

Application(s) 16 may then receive a delivery signal 64 indicating delivery of a message in the inbound queue 22. As such, the request made by the user may be realized. For example, if the user requests to normalize media items in a media library, the result, based on the process described above, is that the target application processes the delivered media normalization data and the media index is updated. In one embodiment, once the queuing process is complete, any messages may be purged from the inbound and/or outbound queues.

FIGURE 2 illustrates a message queuing process initiated from the server 14. In this embodiment, the request for an application service may be initiated by a user from terminal 68. Alternatively or additionally, the request may be initiated by a third-party service provider from terminal 70. Non-limiting examples of application services may include installation of one or more applications to the vehicle computing system 12, service packs, or customization settings.

Once the server receives the request, the one or more messages 100 generated by application(s) 52 may be queued in outbound queue 48. A connection 102 may be generated between vehicle computing system 12 and server 14. At this point, vehicle computing system 12, in one embodiment, may also check for message updates as described above.

The server may transmit a response connection signal 104 to the vehicle computing system 12 which may, in turn, transmit a request signal 106 to receive the message(s). The message(s) may be transmitted according to suitable methods known in the art according to the communication system utilized. In one embodiment, if the message is large, the message may be transmitted as multiple messages (as described above).

Upon receiving the request signal 106, the server 14 may transmit the outgoing message(s) 108a and transmit the one or more messages 108a to the vehicle computing system 12. For example, and without limitation, the one or more messages may be one or more installation files for one or more applications.

The data transport manager 26 may direct the incoming message 118 to the inbound queue 24 of the vehicle computing system 12. A delivery signal 120 may be sent to the application(s) 16 indicating to the application(s) 16 that one or more messages are available in the inbound queue 24. In one embodiment, upon receipt of the delivery signal 120 to the application(s) 16, further processing of the one or more messages in the message queue 24 may be accomplished. For example, if the messages are complete installation files, the one or more messages may be transmitted to an installer (not shown) for initial processing. Additionally or alternatively, a message may be generated to alert the user to initiate installation. Alternatively, if the messages are not complete installation files, the installer may retrieve additional installation files to complete installation.

After processing is complete, a result message 122 may be transmitted to the outbound queue 22. A non-limiting example of a result message 122 includes an installation log.

In one embodiment, an overwrite feature implemented in the message queuing system 10 may overwrite a previous result message 122 (or result message 58 of FIGURE 1) stored in the outbound queue 22 (or outbound queue 48 of FIGURE 1). For example, any messages remaining in the queue 22, 48 longer than 90 days may be overwritten. The overwrite feature may be available during both a client initiated event and/or a server initiated event. This feature may allow for more efficient space allocation.

During or after the message transmission from the server 14, vehicle computing system 12 may generate a second connection 110 to the server in order to check for waiting messages at server 14 and/or transmit the outgoing message. In one embodiment, the original connection 102 may persist and signal 110 may be a message update check signal and/or message transmission signal. The server 14 may return a response signal 112 and vehicle computing system 12 may then transmit the outgoing message 114a.

The server may place the incoming message 114b in the inbound queue 50 and transmit a confirmation signal 116 to vehicle computing system 12 confirming receipt of the message 114b. At the server 14, the message (e.g., the installation log) may be delivered via data link 124 to application(s) 52.

FIGURE 4 illustrates an example block topology for the vehicle based computing system 12 for a vehicle 300. A vehicle enabled with a vehicle-based computing system may contain a visual front end interface 302 located in the vehicle. The user may also be able to interact with the interface if it is provided, for example, with a touch sensitive screen. In another illustrative embodiment, the interaction occurs through, button presses, audible speech and speech synthesis.

In the illustrative embodiment shown in FIG. 4, a processor 304 controls at least some portion of the operation of the vehicle-based computing system. Provided within the vehicle, the processor allows onboard processing of commands and routines. Further, the processor is connected to both non-persistent 306 and persistent storage 308. In this illustrative embodiment, the non-persistent storage is random access memory (RAM) and the persistent storage is a hard disk drive (HDD) or flash memory.

The processor is also provided with a number of different inputs allowing the user to interface with the processor. In this illustrative embodiment, a microphone 310, an auxiliary input 312 (for input 313), a USB input 314, a GPS input 316 and a BLUETOOTH input 318 are all provided. An input selector 310 is also provided, to allow a user to swap between various inputs. Input to both the microphone and the auxiliary 312 connector is converted from analog to digital by a converter 322 before being passed to the processor 304.

Outputs to the system can include, but are not limited to, a visual display 302 and a speaker 324 or stereo system output. The speaker 324 is connected to an amplifier 326 and receives its signal from the processor 304 through a digital-to-analog converter 328. Output can also be made to a remote BlueTooth device such as PND 330 or a USB device such as vehicle navigation device 332 along the bidirectional data streams shown at 334 and 336 respectively.

In one illustrative embodiment, the system 12 uses the BlueTooth transceiver 318 to communicate 338 with a user's nomadic device 340 (e.g., cell phone, smart phone, PDA, etc.). The nomadic device 340 can then be used to communicate 342 with a network 344 outside the vehicle 300 through, for example, communication 346 with a cellular tower 348.

Exemplary communication between the nomadic device and the BlueTooth Trasceiver is represented by signal 350.

Pairing a nomadic device 340 and the BlueTooth transceiver 318 can be instructed through a button 352 or similar input, telling the CPU that the onboard BlueTooth transceiver will be paired with a BlueTooth transceiver in a nomadic device.

Data may be communicated between CPU 304 and network 344 utilizing, for example, a data-plan, data over voice, or DTMF tones associated with nomadic device 340. Alternatively, it may be desirable to include an onboard modem 354 in order to transfer data between CPU 304 and network 344 over the voice band. In one illustrative embodiment, the processor 304 is provided with an operating system including an API to communicate with modem application software. The modem application software may access an embedded module or firmware on the BlueTooth transceiver 318 to complete wireless communication with a remote BlueTooth transceiver (such as that found in a nomadic device). In another embodiment, nomadic device 340 includes a modem for voice band or broadband data communication. In the data-over-voice embodiment, a technique known as frequency division multiplexing may be implemented when the owner of the nomadic device 340 can talk over the device while data is being transferred. At other times, when the owner is not using the device, the data transfer can use the whole bandwidth (300 Hz to 3.4kHz in one example).

If the user has a data-plan associated with the nomadic device 340, it is possible that the data- plan allows for broad-band transmission and the system could use a much wider bandwidth (speeding up data transfer). In still another embodiment, nomadic device 340 is replaced with a cellular communication device (not shown) that is affixed to vehicle 300. In yet another embodiment, the ND 340 may be a wireless local area network (LAN) device capable of communication over, for example (and without limitation), an 802.11g network (i.e., WiFi) or a WiMax network.

In one embodiment, incoming data can be passed through the nomadic device 340 via a data-over-voice or data-plan, through the onboard BlueTooth transceiver 318 and into the vehicle's internal processor 304. In the case of certain temporary data, for example, the data can be stored on the HDD 308 or other storage media until such time as the data is no longer needed.

Additional sources that may interface with the vehicle include a personal navigation device 330, having, for example, a USB connection 356 and/or an antenna 358; or a vehicle navigation device 332, having a USB 360 or other connection, an onboard GPS device 316, or remote navigation system (not shown) having connectivity to network 344.

Further, the CPU could be in communication with a variety of other auxiliary devices 362. These devices can be connected through a wireless 364 or wired 366 connection. Also, or alternatively, the CPU could be connected to a vehicle based wireless router 368, using for example a WiFi 370 transceiver. This could allow the CPU 304 to connect to remote networks in range of the local router 368.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. A computer-implemented method for queuing messages for transmission to/from a vehicle, the computer-implemented method comprising:
receiving one or more messages from one or more applications for performing one or more vehicle-related events, the one or more messages including a message identifier for each of the one or more vehicle applications to correlate the one or more messages with the one or more applications;
queuing the one or more messages for transmission;
determining a state of a vehicle's connection to a wireless network;
transmitting the one or more queued messages if the vehicle is connected to the wireless network; and
performing the one or more vehicle-related events based on the one or more messages.

2. The computer-implemented method of claim 1 wherein the one or more messages are outgoing messages and, if the vehicle is connected to the wireless network, the method further comprises:
receiving one or more incoming messages; and
queuing the one or more incoming messages for transmission to the one or more applications.

3. The computer-implemented method of claim 2 wherein the method is performed at a vehicle computing system.

4. The computer-implemented method of claim 3 wherein the method is additionally performed at a server.

5. The computer-implemented method of claim 1 wherein the vehicle connects to the wireless network at a predetermined time or occurrence.

6. The computer-implemented method of claim 5 wherein the transmitting step further comprises transmitting the one or more messages at the predetermined time or occurrence.

7. The computer-implemented method of claim 1 wherein the one or more vehicle-related events is selected from a media lookup event, a media tagging event, an emergency call event, a vehicle diagnostics event, and a Real Simple Syndication (RSS) event.

8. The computer-implemented method of claim 1 wherein the one or more vehicle-related events is selected from application installation, service pack installation, or installation of customization settings.

9. The computer-implemented method of claim 1 wherein the determining step further comprises determining a primary address with which to generate a connection.

10. The computer-implemented method of claim 9 wherein the primary address is a host name.
